# EUROPEAN PATENT APPLICATION

(11) **EP 2 224 302 A1**
(43) Date of publication of application: **01.09.2010**
(21) Application number: 09153746.4
(22) Date of filing: 26.02.2009
(51) Int. Cl.: G05B 19/418, G06Q 10/00

(54) **A method and a system for manufacturing a final product using a manufacturing executing system**

(71) Applicant: Siemens Aktiengesellschaft, 80333 München (DE)
(72) Inventor: Magagnini, Marco, 16137 Genova (IT); Tavani, Ornella, 16149 Genova (IT)
(74) Representative: Fischer, Michael

(57) **Abstract**

The invention relates to a method for manufacturing a final product (A) in a manufacturing executing system (MES), including the phase of building a production rule (10) of the final product (A), comprising a step of defining a plurality of product segments (20a, 20b, 20c, 30a, 30b, 30c), each product segments (20a, 20b, 20c, 30a, 30b, 30c) specifying at least a process to be executed and resources involved therein. According to this method the step of defining includes associating the product segments (20a, 20b, 20c, 30a, 30b, 30c) to respective production rules (20, 30) of components (B, C) of the final product (A) and linking the respective production rules (20, 30) of the components (B, C) to the production rule (10) of the final product (A), the production rules (20, 30) of the components (B, C) being independently defined with respect to the production rule of the final product (A).

## Description

The present invention relates to a method for manufacturing a final product using a manufacturing executing system (MES). More particularly, the present invention relates to a method of the type above indicated, and including the phase of building a production rule of the final product, comprising a step of defining a plurality of product segments, wherein each product segment at least specifies a process to be executed and resources involved therein.
The present invention further relates to a system for manufacturing a final product using a manufacturing executing system (MES) implementing the method above referred.

As it is well known, a method for manufacturing a final product using a manufacturing executing system (MES) includes a phase of building a production rule for the final product, comprising the steps of defining the resources employed in the manufacturing of the final product, both machineries and human operators, defining the materials required for its realization, as well as the process or processes according to which the resources, starting from the materials required, manufacture the final product.

In particular, the phase of building a production rule is of utmost importance for an advanced and profitable cooperation of the resources and materials being employed, especially when the product is an assembly of a plurality of components which are manufactured by respective resources and materials, since only a timely and correct production of each component results in an accurate manufacture of the final product.

The above mentioned method for manufacturing a final product is supported by a software application running in a computerized system of the manufacturing executing system (MES) which provides instruments, preferably including a graphical interface, for building the production rule.

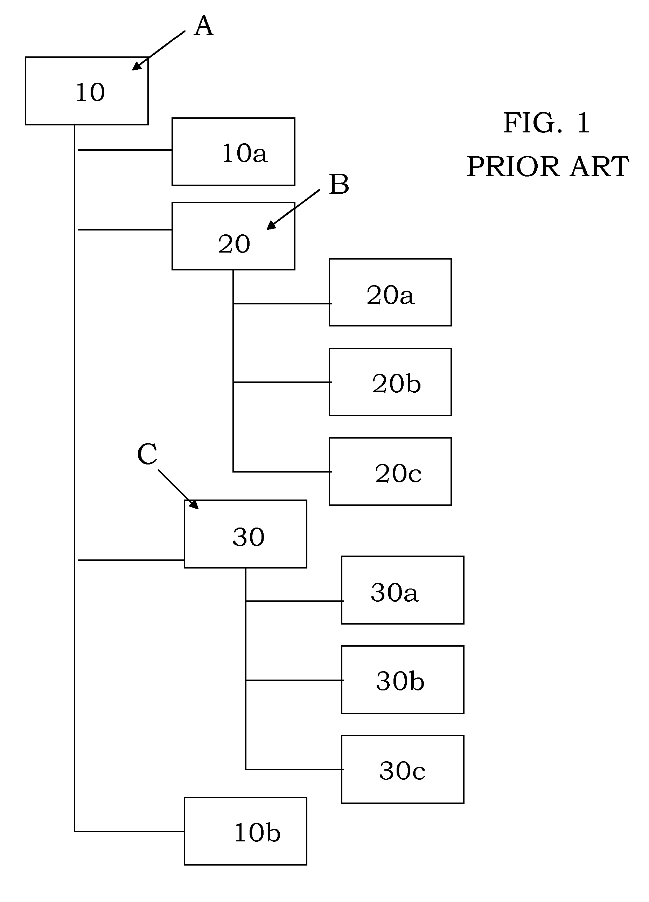

With reference to figure 1 it is schematically represented and indicated with 10 the phase of building a production rule for a final product A, including the definition of a plurality of product segments 10a, 10b, 20, 30, wherein each product segment 10a, 10b, 20, 30 specifies processes to be executed, as well as the resources and materials involved in such processes.

For example, the phase of building the production rule 10 for the manufacturing of a bike A, includes the definition of a product segment 10a for the manufacturing of a chassis for the bike A, the definition of a product segment 10b for the manufacturing of a mudguard, which is for example integrated with the chassis, and the definition of product segments 20, 30 for the manufacturing of other parts of the bike A, for instance an engine 20 and wheels 30, each one including the definition of further productions segments 20a, 20b, 20c and 30a, 30b, 30c in turn including the specification of resources, materials and processes involved in the manufacturing of such parts of the bike.

A drawback of the method described above is that the phase of building the production rule 10 does not provide an efficient support for the manufacturing of complex final products A which results from an assembly of a plurality of components B, C, each component being separately manufactured, i.e. employing different resources, materials and processes. In fact, according to this method, the definition of the product segments 20a, 20b, 20c, and 30a, 30b, 30c of each component B, C is embedded, in other words nested, inside the production rule 10 of the final product A and does not support a separate definition of the components B, C and the respective process segments.

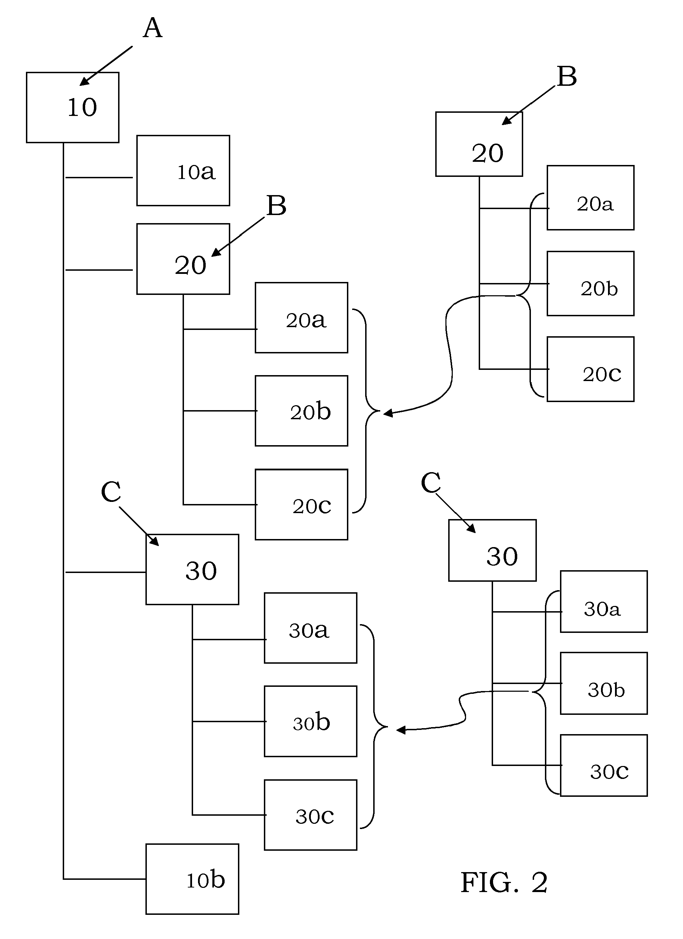

This drawback is partly solved by a modified method for manufacturing a final product A wherein, for each component B, C of the final product A, a respective production rule 20, 30 is previously defined and thereafter copied, together with its previously defined product segments 20a, 20b, 20c, and 30a, 30b, 30c, inside the production rule 10 of the final product A. This modified method is schematically represented in figure 2, wherein the production rules 20, 30 of the components B, C, each including the definition of respective product segments 20a, 20b, 20c, and 30a, 30b, 30c, are separately built, and then copied inside the production rule 10 of such final product A.

However, even if this modified method partially solve the problem of separately defining the process segments of the components B, C of a complex final product A, it is affected by another drawbacks due to the fact that the process segments 20a, 20b, 20c, and 30a, 30b, 30c are defined twice, a first time for the components B, C and a second time for the final product A, i.e. when the production rules 20, 30 of such components B, C are copied inside the production rule 10 of the final product A.
This drawback is burdensome when the production rules 20, 30 of the components B, C are changed, for example because some resources are not available at all and the corresponding process for the manufacturing of a component should be changed. In this case, two operations are required to guarantee that the final product A is correctly manufactured: firstly, one or more process segments 20a, 20b, 20b, corresponding to the production rule 20 of the component B to be changed, are modified, and secondly, the modified production rule 20, together with the modified product segments 20a, 20b, 20b, are copied inside the production rule 10 of the final product A. This drawback is even more burdensome when a same component B is manufactured for several different final products, since the modified production rule 20 of such component B, together with the respective product segments 20a, 20b, 20b, should be copied in the production rules of all the final products.

The problem of the present invention is to provide a method for manufacturing a final product in a manufacturing execution system which supports a separate definition of components of the final product and, at the same time, an easy propagation of modifications of such components directly on the final product, overcoming the drawbacks and the limitations that currently affect the method according to the prior art.

### Summary of the invention

The solution idea at the base of the present invention is that of defining links from the production rule of a final product to production rules of components of the final product, wherein the production rules of such components are separately defined with corresponding production segments, so that a modification of one or more production segments of a component directly corresponds to a modification of the production rule of the final product linked to such a component.
According to this solution idea, the problem mentioned above is solved by a method for manufacturing a final product in a manufacturing executing system (MES), including the phase of building a production rule of the final product, comprising a step of defining a plurality of product segments, each product segments at least specifying a process to be executed and resources involved therein, characterized by the fact that the step of defining includes associating the product segments to respective production rules of components of the final product and linking the respective production rules of such components to the production rule of the final product, said production rules of said components being independently defined with respect to said production rule of said final product.

In an aspect of the present invention, the phase of linking comprises the steps of setting reference product segments for the production rule of the final product and of connecting the reference product segments to the respective production rules of the components. The reference product segments do not include the specification of resources, materials and processes but are linked to production rules of components wherein such resources, materials and processes are defined.

Advantageously, the production rule of the final product may be built setting only reference product segments and connecting them to respective production rules of the components, and a modification of the production rule of the final product may be obtained modifying one or more respective production rules of the components linked, without changing the reference product segment, or linking a reference product segment to a different respective production rule.

In another aspect of the present invention the step of defining product segments for the final product includes associating at least one product segment directly to the production rule of the final product, in other words including the product segment inside the production rule of the final product. Accordingly, the method advantageously supports also the definition of product segments, i.e. resources, materials and or processes which are directly associated with the final product and whose definition in a separate component would result inappropriate.

In a further aspect of the method of the present invention, also the components are linked to sub-components via reference product segments. In this case, the step of linking comprises setting reference product segments for the respective production rule of the components, and connecting such reference product segments to further production rules of sub-components of said components. Advantageously, each sub-component comprises respective product segments whose modifications are directly propagated on the components, and consequently, on the final product.

In another aspect, the method of the present invention further defines different embodiments of a same component, including the association of product segments to respective production rules corresponding to different embodiments of the component. Advantageously, the production rule of the final product may be updated changing a link, i.e. a reference product segment, and connecting it to a different embodiment of the same component.

In a preferred embodiment of this aspect of the invention, a versioning number is assigned to the respective production rules of the corresponding different embodiments of the same component. Accordingly, the step of setting the reference product segments further comprises storing the versioning number in the reference product segments.

In another aspect of the invention, a predetermined status is assigned to one of the production rules of different embodiments of the same component. Accordingly, the step of setting the reference product segments comprises storing the predetermined status in the reference product segment. Advantageously, according to this aspect of the present invention, the reference product segment which stores the predetermined status is automatically connected to the respective production rule whereto the predetermined status is assigned, i.e. when the predetermined status is assigned to a production rule of a different embodiment of a component, the reference product segment of the final product is automatically linked to such different component.

According to the method of the present invention, the final product is manufactured by executing any product segments directly associated to the final product, i.e. the product segments included in its production rule, and further executing any product segments of the components linked by the final product.

The method of the present invention provides an easy and effective way of modifying the production rule of the final product, including the execution of at least one of the following steps:
- modifying one or more product segments directly associated to the final product, i.e. the resources, materials or processes included in the specification of at least one product segment of the production rule of the final product;
- modifying one or more product segments of a production rule of at least one component of the final product, such component being linked by the reference product segments of the final product;
- modifying the versioning number of the reference product segment which is connected to the production rule of a first embodiment of the component, in order to point to a another embodiment of the same product;
- assigning the predetermined status, which was previously assigned to the production rule of the first embodiment of the component, to the production rule of the other embodiment of such component.

The present invention further relates to a system for manufacturing a final product in a manufacturing executing system, implementing the method and solving the problem mentioned above. More particularly, the system includes computerized means comprising a program for building a production rule of the final product and for defining a plurality of product segments, each product segments at least specifying a process to be executed and resources involved therein, characterized by the fact that the product segments are associated to respective production rules of components of the final product and by the fact that the respective production rules are linked to the production rule of the final product, the production rules of the components being independently defined with respect to the production rule of the final product.

Further advantages of the method and system according to the present invention will be apparent from the following description given by way of example and without limiting the scope of protection of the invention.

### Brief description of the drawings

Figure 1 schematically represents a production rule of a final product according to a manufacturing method of the prior art.
Figure 2 schematically represents a production rule of the final product of figure 1 according to a modified manufacturing method of the prior art.
Figure 3 schematically represents a production rule of a final product according to the manufacturing method of the present invention.
Figure 4 schematically represents an alternative embodiment of the production rule of the final product of figure 3, according to the manufacturing method of the present invention.

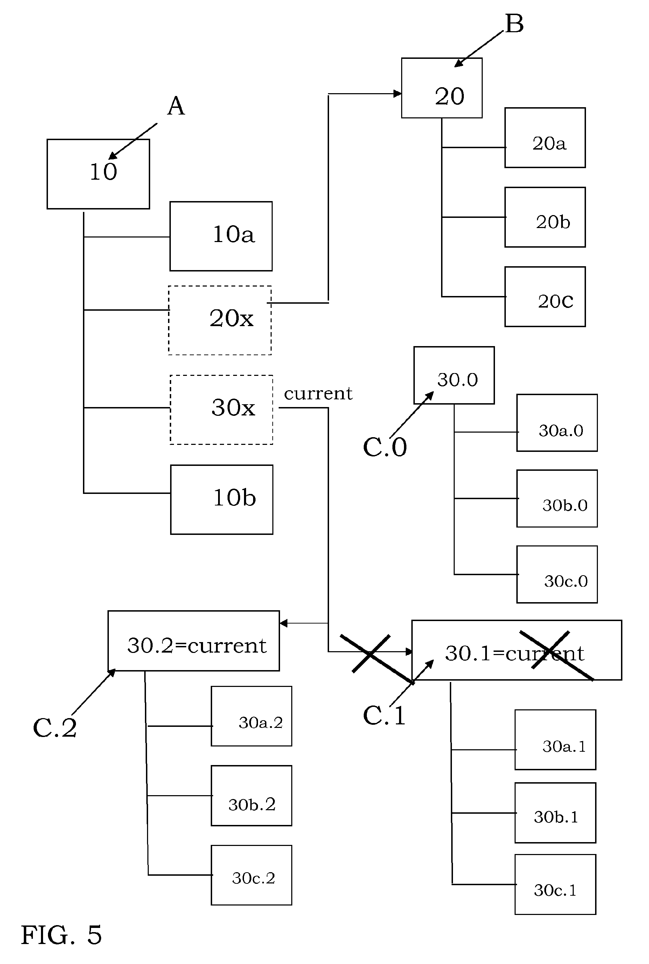

Figure 5 schematically represents another alternative embodiment of the production rule of the final product of figure 3, according to the manufacturing method of the present invention.

### Detailed description

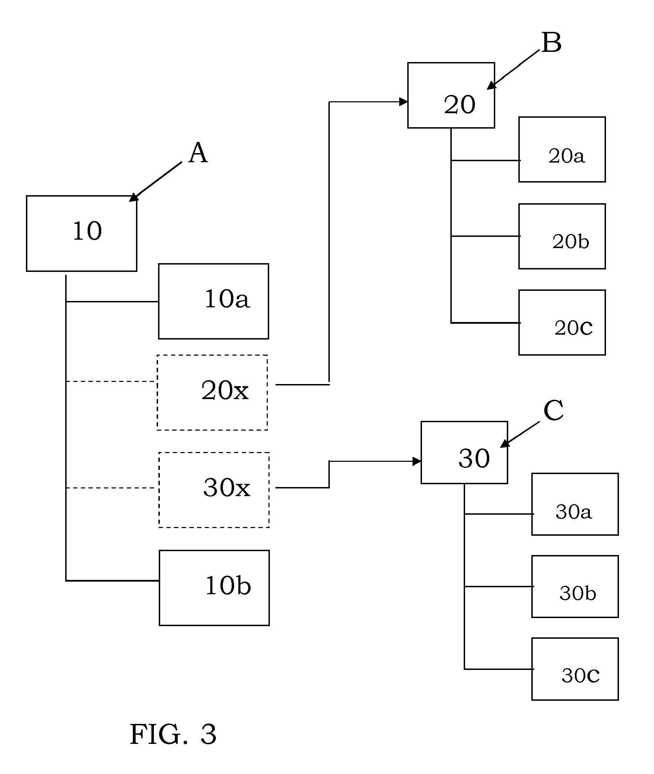

With reference to figure 3, a method for manufacturing a final product A in a manufacturing executing system (MES) is schematically represented in a diagram block. As will be apparent from the following description, each block of the diagram schematically represents a definition of the resources employed in the manufacturing, both machineries and human operators, materials required for its realization, as well as the process or processes according to which the resources, starting from the required materials, cooperate for the manufacturing of the final product A.

Without limiting the scope of the present application, the final product A may be a complex assembly of a plurality of components B, C which are manufactured separately by respective resources, materials and processes, and whose timely and correct production result in an accurate and timely manufacturing of the final product A. A number of components B, C involved in the manufacturing of the final product A, as well as their respective compositions, i.e. materials, processes and resources allocated for their manufacturing, may change, for example because the final product A is modified or the resources of the industrial plant should be reallocated. The industrial plant is for example an automotive plant including hundred of workers and machine tools involved in the production of a plurality of components B, C, for example engines B and wheels C of cars A, wherein each component B, C is produced in a working unit of the automotive plant, and by the corresponding allocated resources.

The method of manufacturing the final product includes a phase of building a production rule 10 of the final product A, comprising a step of defining a plurality of product segments 20a, 20b, 20c, 30a, 30b, 30c, each product segments 20a, 20b, 20c, 30a, 30b, 30c including the specification of processes to be executed and resources and materials involved therein.

According to an aspect of the present invention, the step of defining the plurality of product segments includes associating the product segments 20a, 20b, 20c, 30a, 30b, 30c to respective production rules 20, 30 of components B, C of the final product A and linking the respective production rules 20, 30 of the components B, C to the production rule 10 of the final product A.

With reference to the non limiting example given above, the product segments 20a, 20b, 20c include the definition of resources, materials, processes, workflows, etc involved in the manufacturing of the engine B of a car A while the product segments 30a, 30b, 30c include the definition of resources, materials, processes, workflows, etc for the manufacturing of wheels C for a car A, these latter being for example produced in a separate unit of a subsidiary of the automotive plant.

The phase of linking the respective production rules 20, 30 of the components B, C to the production rule 10 of the final product A comprises a step of setting product segments 20x, 30x for the production rule 10 of the final product A, hereafter indicated as reference product segments 20x, 30x and the step of connecting the reference product segments 20x, 30x to the respective production rules 20, 30 of the components B, C. In other words, the reference product segments 20x, 30x are pointers to components B, C of the final products A which do not directly include the specification of processes, material, resources, etc but which indicates where such processes, material, resources, etc are defined.

With reference to figure 3, the reference product segments 20x, 30x are represented in dotted blocks 20x, 30x of the production rule 10, in order to graphically distinguish them with respect to product segments 20a, 20b, 20c, 30a, 30b, 30c.

The step of defining the plurality of product segments further includes directly associating one or more product segments 10a, 10b to the production rule 10 of the final product A, as schematically represented in non-dotted boxes 10a, 10b of figure 3. The product segment 10a, 10b are substantially included in the production rule 10 in a known way and are preferably used when the corresponding processes are executed directly on the final product A, for example the finishing works of the car.

The linking of a production rule 10 of a final product A to a production rule 20 of a component B, C as described above may be reiterated at component level, in order to split the production of a component in a plurality of sub-components. This is advantageous when the component C is a complex assembly of sub-components or part which may be manufactured separately, in a similar way to a complex final product A.

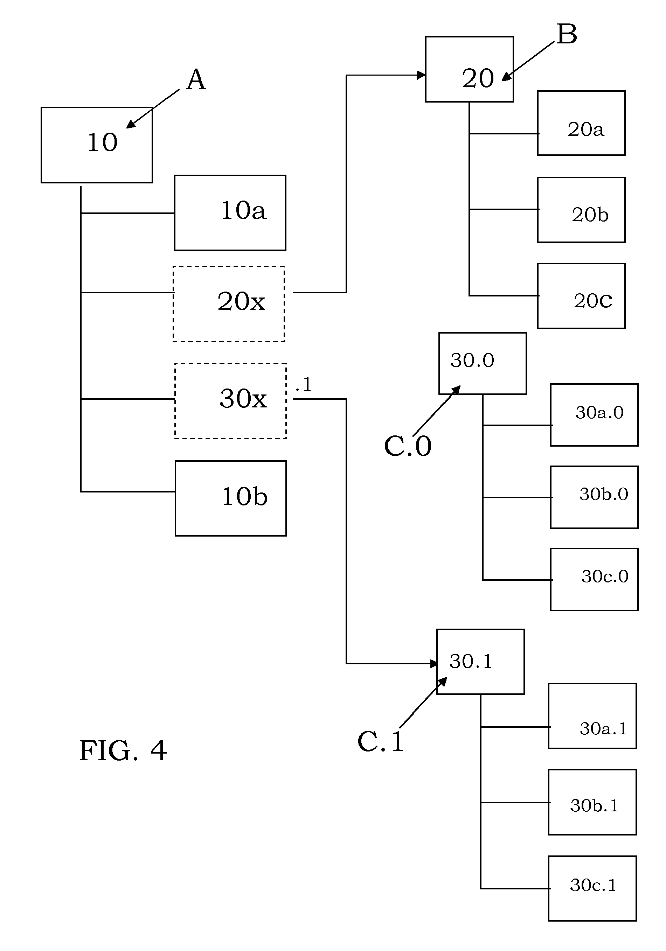

According to this aspect of the present invention, the step of linking comprises setting reference product segments for the production rules 20, 30 of the components B, C, and connecting such reference product segments to further production rules of respective sub-components. For example, the subcomponents of the engine B may be a piston and a cylinder which are preferably manufactured according to different and separate production rules. Advantageously, by linking the reference product segments of the sub-components to the production rules 20, 30 of the components B, C, when the production rule of a sub-component is changed, the changes is automatically inherited by the component B referring to the sub-component in re and also by the final product A referring to the component B.
In another aspect of the present invention, schematically represented in figure 4, the method comprises a definition of different versions C.0, C.1 of a same product C. This is particularly useful when a final product may be assembled with different variant embodiments of a component, for example when a car A may mount wheels C.0 of a first dimension or wheels C.1 of a second dimension.
More particularly, advantageously according to this aspect of the invention, the product segments 30a.0, 30b.0, 30c.0, 30a.1, 30b.1, 30c.1, 30a.2, 30b.2, 30c.2 are associated to respective production rules 30.0, 30.1, 30.2 of corresponding different variant embodiments C.0, C.1, C.2 of the same component C and a versioning number .0, .1, .2 is assigned to the respective production rules 30.0, 30.1, 30.2 of such different variant embodiments C.0, C.1, C.2. Advantageously, both the production rules and the corresponding production segments are identified by the versioning numbers .0, .1, .2 and may be stored, even when not used at all, to maintain a history and an evolution of the production rules involved in the manufacturing of certain final products.

The step of setting the reference product segments 20x, 30x further comprises storing the versioning number, for instance .1, in the reference product segments 30x, and connecting the reference product segments 30x which stores the versioning number.1 with the respective production rule 30.1 whereto the versioning number .1 is assigned.

According to a further aspect of the present invention, the method of manufacturing comprises a step of assigning a predetermined status "current" to one single, for instance 30.2, of the respective production rules 30.0, 30.1, 30.2 of the corresponding different variant embodiments C.0, C.1, C.2 of the same component C. The predetermined status "current" is also stored in the reference product segment 30x of the final product A, for automatically connecting the respective production rule 30.2 whereto the predetermined status "current" is assigned.

Advantageously, through the predetermined status "current", the link to a production rule of a component may be automatically changed, without modifying the reference production segment but by simply assigning the predetermined status "current" to a different production rule of the sub-components of the final product.

Moreover, when defining a reference production segment, it is possible to refer to a specific production rule version or to refer to the one labeled as "current".

According to the method of the present invention, the production rule 10 of the final product A is executed when the manufacturing of the final product A is required. More particularly, the following steps are provided:
- executing any product segments 10a, 10b directly associated to the final product A, i.e. included in the production rule 10;
- executing any product segments 20a, 20b, 20c, 30a, 30b, 30c directly associated to the components B, C of the final product A and which is connected by the reference product segments 20x, 30x.

When changes in the production of the final product A are required, the corresponding production rule 10 is modified executing at least one of the following steps:
- modifying one or more of the product segments 10a, 10b directly associated to the final product A;
- modifying one or more of the product segments 20a, 20b, 20c, 30a, 30b, 30c directly associated to the components B, C of the final product A and which are linked by the reference product segments 20x, 30x;
- modifying the versioning number .1 of a reference product segment 30.1 which is connected to the production rule 30.1 of one of the variant embodiments, for instance a first embodiment C.1 of the component C, for linking the production rule 30.2 of another embodiment C.2 of the component C;
- assigning the predetermined status "current", previously assigned to the production rule 30.1 of the first embodiment C.1 of the component C, to the production rule 30.2 of the other embodiment C.2 of the component C.

The present invention further relates to a system for manufacturing a final product A using a manufacturing executing system (MES). The system includes computerized means comprising a program for building a production rule 10 of the final product A and for defining a plurality of product segments 20a, 20b, 20c, 30a, 30b, 30c, each specifying at least a process to be executed and resources involved therein.

According to the present invention, the product segments 20a, 20b, 20c, 30a, 30b, 30c are associated to respective production rules 20, 30 of components B, C of the final product A and the respective production rules 20, 30 are linked to the production rule 10 of the final product A. The system includes product segments 20x, 30x also indicated as reference product segments 20x, 30x, which are connected to the respective production rules 20, 30 of the components B, C and standard product segments 10a, 10b which are directly associated to the production rule 10 of the final product A.

Advantageously, the system further comprises reference product segments for the respective production rule 20, 30 of the components B, C, which are connected to further production rules of sub-components of the components B, C. Advantageously, according to the method and system of the present invention, a production rule of a final product A which is composed of a plurality of components B, C is built by reference to such components and is easily modifiable, changing the link to a new component or a different embodiment of the same component, or automatically inheriting a change effectuated on the production rule of a component, even when the reference production segment thereto referred, is not changed.

Advantageously, the method and system supports in a easy way the versioning of components, because when the a new production rule and corresponding new production segments of a new embodiment of a component is provided, it is not required to copy it in the production rule of the final product but it is sufficient to change the link, i.e. the reference production segment, in order to point to the new embodiment of the component.

Advantageously, it is possible to link a production rule of the final product to the current embodiments of the respective components, in order to automatically point to updated versions of the components, which are indicated with a predetermined status "current". In other words, advantageously according to the invention, production rules are designed for every single component or even sub-component of a final product in an independent manner.
In particular, the production rules of the components can be independently modeled and then used in the production rule of the final product.

The production rule of the final product can even refer all the components production rules and include only the portion tied to a specific model for the final product, without the need to describe all the components or sub-components used.

This allow engineering resources to be focused on the most important aspect at a time: during the design of production rule of a component, all details about the final product but also to the sub-components are not involved, while during the design of the final product only a basic definition of the components is to be considered. In particular, the production rule of a final product is thus based on other production rules of its components, each one having been duly optimised.

Moreover, by using the above described method and system, a user can simply define a production rule of a final product by selecting from other existing production rules for components and adding all the specific information for the final product. Then, the method will automatically perform all the integrity checks to assure that the production rule of the final product is consistent with the definitions of the components so that it can be used to correctly generate production orders. Moreover, using the versioning mechanism, according to the invention, the production rule of the final product is completely independent from the production rules of the components. In particular, advantageously according to this aspect of the invention, it is possible to refer to the "current" production rule of a component so that each modification to such a production rule is automatically included in the production rule of the final product. Moreover, the final products as obtained according to the present invention can evolve independently one from the others.

## Claims

1. Method for manufacturing a final product (A) using a manufacturing executing system (MES), including the phase of building a production rule (10) of said final product (A), comprising a step of defining a plurality of product segments (20a, 20b, 20c, 30a, 30b, 30c), each product segments (20a, 20b, 20c, 30a, 30b, 30c) at least specifying a process to be executed and resources involved therein, **characterized by** the fact that
said step of defining includes associating said product segments (20a, 20b, 20c, 30a, 30b, 30c) to respective production rules (20, 30) of components (B, C) of said final product (A) and linking the respective production rules (20, 30) of said components (B, C) to the production rule (10) of said final product (A), said production rules (20, 30) of said components (B, C) being independently defined with respect to said production rule of said final product (A).

2. Method according to claim 1 wherein said linking comprises the steps of setting reference product segments (20x, 30x) for the production rule (10) of said final product (A), and of connecting said reference product segments (20x, 30x) to the respective production rules (20, 30) of said components (B, C).

3. Method according to claim 1 wherein said step of defining includes associating at least one product segment (10a, 10b) directly to the production rule (10) of said final product (A).

4. Method according to claim 1 wherein said step of linking comprises the step of setting further reference product segments for the respective production rule (20, 30) of said components (B, C), said further reference product segments of said components (B, C) being connected to further production rules of sub-components of said components (B, C).

5. Method according to claim 2 wherein said step of defining further comprises associating said product segments (30a.0, 30b.0, 30c.0, 30a.1, 30b.1, 30c.1, 30a.2, 30b.2, 30c.2) to respective production rules (30.0, 30.1, 30.2) of corresponding different embodiments (C.0, C.1, C.2) of a same component (C).

6. Method according to claim 5 **characterized by** comprising a step of assigning a versioning number (.0, .1, .2) to the respective production rules (30.0, 30.1, 30.2) of the corresponding different embodiments (C.0, C.1, C.2) of said same component (C).

7. Method according to claim 6 wherein said step of setting said reference product segments (20x, 30x) further comprises storing said versioning number (.1) in said reference product segments (30x), and said step of connecting comprises connecting the reference product segments (30x) storing said versioning number (.1) with a respective production rule (30.1) whereto said versioning number (.1) is assigned.

8. Method according to claim 6 **characterized by** further assigning a predetermined status to one (30.2) of said respective production rules (30.0, 30.1, 30.2) of the corresponding different embodiments (C.0, C.1, C.2) of said same component (C).

9. Method according to claim 7 wherein said step of setting said reference product segments (20x, 30x) further comprises storing said predetermined status (current) in said reference product segment (30x) and by the fact that said step of connecting automatically connects the reference product segment (30x) storing said predetermined status (current) with the respective production rules (30.2) whereto said predetermined status (current) is assigned.

10. Method according to claim 1 **characterized by** comprising the step of executing the production rule (10) of said product (A) comprising:
- executing any product segments (10a, 10b) directly associated to the final product (A);
- executing any product segments (20a, 20b, 20c, 30a, 30b, 30c) directly associated to the components (B, C) of the final product (A) connected by the reference product segments (20x, 30x).

11. Method according to claim 10 **characterized by** the step of modifying the production rule (10) of said product (A), including at least one of the following steps:
- modifying one or more of said product segments (10a, 10b) directly associated to the final product (A);
- modifying one or more of said product segments (20a, 20b, 20c, 30a, 30b, 30c) directly associated to the components (B, C) of said final product (A) which are linked by said reference product segments (20, 30x);
- modifying the versioning number (.1) of a reference product segment (30.1) which is connected to the production rule (30.1) of a first embodiment (C.1) of said component (C), for linking another production rule (30.2) of another embodiment (C.2) of said component (C).
- assigning said predetermined status (current), previously assigned to the production rule (30.1) of said first embodiment (C.1) of said component (C), to the production rule (30.2) of said another embodiment (C.2) of the component (C).

12. System for manufacturing a final product (A) using a manufacturing executing system (MES), including computerized means including a program for building a production rule (10) of said final product (A) and for defining a plurality of product segments (20a, 20b, 20c, 30a, 30b, 30c), each product segments (20a, 20b, 20c, 30a, 30b, 30c) at least specifying a process to be executed and resources involved therein, **characterized by** the fact that said product segments (20a, 20b, 20c, 30a, 30b, 30c) are associated to respective production rules (20, 30) of components (B, C) of said final product (A) and by the fact that said respective production rules (20, 30) are linked to the production rule (10) of said final product (A), said production rules (20, 30) of said components (B, C) being independently defined with respect to said production rule of said final product (A).

13. System according to claim 12 **characterized by** comprising reference product segments (20x, 30x), connected to the respective production rules (20, 30) of said components (B, C).

14. System according to claim 12 **characterized by** comprising product segments (10a, 10b) directly associated to the production rule (10) of said final product (A).

15. System according to claim 12 **characterized by** comprising further reference product segments for the respective production rule (20, 30) of said components (B, C), which are connected to further production rules (40, 50) of sub-components of said components (B, C).
